# EUROPEAN PATENT APPLICATION

(11) **EP 2 221 636 A2**
(43) Date of publication of application: **25.08.2010**
(21) Application number: 10152019.5
(22) Date of filing: 28.01.2010
(51) Int. Cl.: G01S 13/95, G01S 7/16, G01S 7/22

(54) **Alterting of unknown weather due to radar attenuation**

(30) Priority: 06.02.2009 US 367429
(71) Applicant: Honeywell International Inc., Morristown, NJ 07962 (US)
(72) Inventor: Khatwa, Ratan, Morristown, NJ 07962-2245 (US)
(74) Representative: Buckley, Guy Julian

(57) **Abstract**

A system and method for determining and displaying an unknown weather due to receiving maximum radar attenuation compensation using a three-dimensional memory. The system and method may also determine whether the flight plan conflicts with an unknown weather zone. The user is alerted to an unknown weather zone and any flight plan conflict with an unknown zone. The user is alerted to the unknown weather zone using displays, sounds, or words that can be generated based on a determined hazard level.

## Description

### BACKGROUND OF THE INVENTION

Weather radar is an aid for detecting adverse weather conditions that are hazardous to flying aircraft such as convective weather, turbulence, windshears and microbursts. Users have exploited such radars to avoid these weather conditions, and due to the radars' capability of early detection, have done so with minimal impact upon the total flight time and distance.

While the radar returns can present detailed and accurate information in ordinary weather, certain types of hazardous weather can pose difficulties for weather radar. As radar energy travels through water molecules, the water molecules reflect a portion of the energy back toward the aircraft. This results in less energy being available to detect raindrops at greater ranges. This process continues throughout the depth of the storm, resulting in a phenomenon known as attenuation. The amount of attenuation increases with an increase in water molecules rate and with an increase in the range traveled through the water molecules (i.e., heavy rain over a large area results in high levels of attenuation, while light rain over a small area results in low levels of attenuation).

While most radars can automatically compensate for this attenuation, there is a limit to the capabilities of automatic attenuation compensation because there is a limit to the amount that receiver sensitivity can be increased. Storms with high rainfall rates can cause the receiver to reach its maximum gain value in a short time and/or short range. Storms can attenuate the radar energy to the extent that it is impossible to determine the weather conditions existing in areas beyond the storm. Operationally, any three-dimensional area of airspace corresponding to the maximum attenuation compensation should be avoided by aircraft. Due to the unknown weather conditions associated with these areas, traditional methods of presenting weather on a display could potentially mislead the user.

### SUMMARY OF THE INVENTION

The present invention comprises a system and method for determining a zone of unknown weather radar information and outputting a display of the associated zone. An example system includes memory, input devices configured to receive parameters, a processor configured to determine unknown weather zones and generate indications based on the unknown zones.

In accordance with further aspects of the invention, the flight plan is checked to see if it conflicts with any unknown weather zone.

In accordance with other aspects of the invention, an alert comprises displaying one or more display features corresponding to the zone of unknown weather information.

In accordance with still further aspects of the invention, the alert is a visual alert, audio alert or a textual alert.

In accordance with yet another aspect of the invention, a hazard level is determined based on the parameters.

In accordance with still further aspects of the invention, the one or more display features include at least one of a shape, a polygon, a bar, or an axis.

As will be readily appreciated from the foregoing summary, the invention provides a system and method for alerting a user to unknown weather zones.

### BRIEF DESCRIPTION OF THE DRAWINGS

Preferred and alternative embodiments of the present invention are described in detail below with reference to the following drawings:

FIGURE 1 is a block diagram illustrating the components of a system formed in accordance with an embodiment of the present invention;

FIGURE 2 is a perspective view illustrating how an unknown weather zone appears in a three-dimensional buffer;

FIGURES 3-1 and 3-2 are flow diagrams illustrating the process of performing enhanced awareness of unknown weather zones;

FIGURES 4-7 are a plan views of examples for showing unknown weather zones on a display monitor; and

FIGURE 8-10 are plan side views for showing unknown weather zones in accordance with embodiments of the present invention.

### DETAILED DESCRIPTION OF THE INVENTION

The present invention is a system, method, and computer program product for enhanced awareness and alerting of weather radar attenuation.

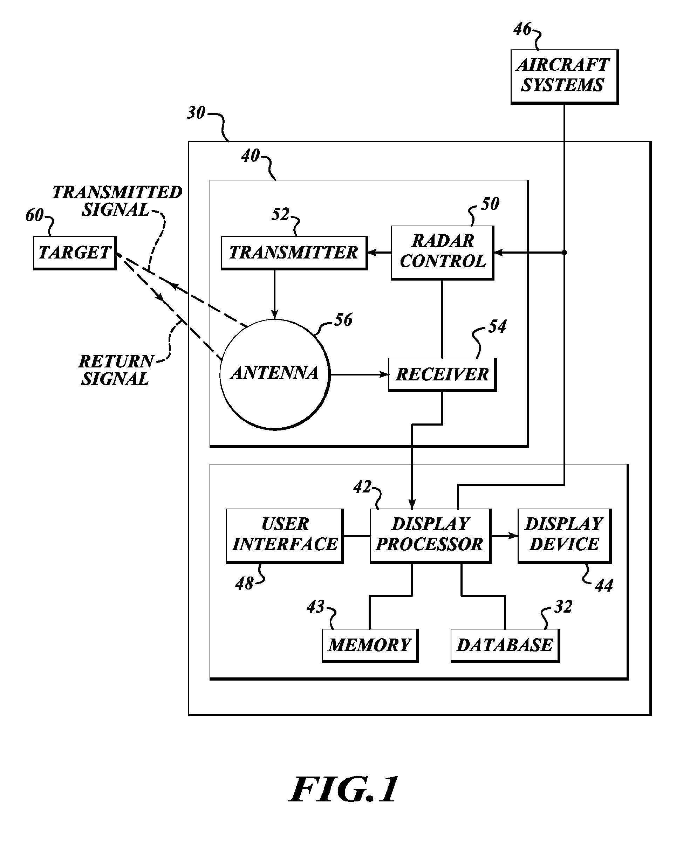

FIGURE 1 illustrates an example system 30 formed in accordance with the present invention. The system 30 includes a weather radar system 40, a display/interface front-end 38, and receives information from aircraft systems 46. The display/interface front-end 38, includes a display processor 42, memory 43, a database 32, a display device 44, and a user interface 48. The display processor 42 is electrically coupled to the radar system 40, the display device 44, the memory 43, and the user interface 48. An example of the radar system 40 includes a radar control 50, a transmitter 52, a receiver 54, and an antenna 56. The radar control 50 controls the transmitter 52 and the receiver 54 for performing the sending and receiving of signals through the antenna 56 based on aircraft data (i.e., position, heading, roll, yaw, pitch, etc.) received from the aircraft systems 46, .e.g. a Flight Management System (FMS), Inertial Navigation System (INS), and/or a global positioning system (GPS).
The translated reflectivity values or return data, as determined by the weather radar system 40 or processor 42, may reveal that maximum compensation based on receiver sensitivity limitations has occurred. Any areas beyond this range must be assumed to be "unknown." The user can decide whether "unknown areas" information is displayed and how it is displayed by utilizing the user interface 48. In other words, the user may request, through the user interface 48, such ordering of the data into a data view as the user desires. In other embodiments, the user interface 48 could be bypassed and the system 30 or the display processor 42 could be configured to require certain data to be automatically displayed (default). Embodiments of the system 30 permit the user to request display of a variety of displays with or without display of unknown weather zones due to the weather radar system 40 reaching maximum attenuation compensation. Views might include a plan view of the weather data, or both a plan and vertical view of the weather data at a particular altitude. Three-dimensional views could also be included.

The aircraft systems 46 generates air data based on signals received from various aircraft flight systems. The weather radar system 40 transmits radar signals from the antenna 56 into space and receives return signals, if a target 60 is contacted by the transmitted radar signal. Preferably, the weather radar system creates reflectivity values by basing the return signals on received power, range, altitude, and other radar factors. The reflectivity values are sent to the display processor 42. The display processor 42 translates the received reflectivity values for storage in a three-dimensional buffer 182 in the memory 43. The display processor 42 then generates an image for presentation on the display device 44 based on any control signals sent from the user interface 48 or based on settings within the processor 42. U.S. Pat. No. 5,059,967 to Roos, U.S. Pat. No. 6,690,317 to Szeto et al., and U.S. Pat. No. 6,667,710 to Cornell et al., all of which are hereby incorporated by reference in their entirety, describe an apparatus and method for displaying weather information.

Alternative embodiments may employ topologies that are different from the embodiment of the system 30 illustrated in FIGURE 1. For example, the elements of the display/interface front-end 38, the display processor 42, the memory 43, the database 32 and the display device 44 might not exist in the star configuration displayed in FIGURE 1. These components could exist on one or more busses that would allow interconnectivity of the elements as necessary to accomplish the function described herein. In some embodiments, the components would be separately addressable on the bus or busses.

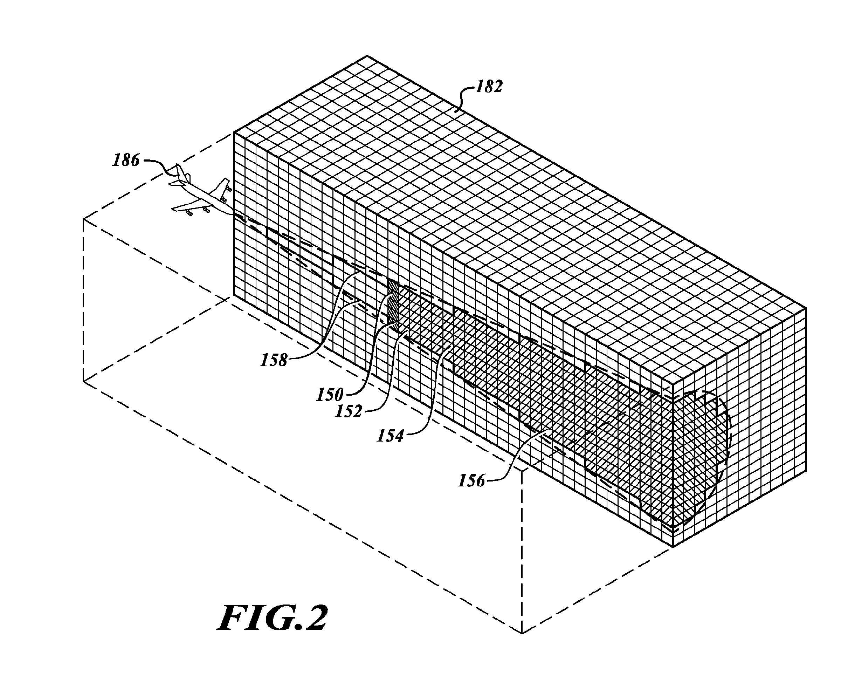

As shown in FIGURE 2, the display processor 42 has transferred radar data received by the receiver 54 into the memory 43. The memory 43 includes a bin-based, three-dimensional buffer 182. Alternatively, any suitable format may be used in a memory device for storing information pertaining to weather objects and/or other objects such as terrain. Each address in the three-dimensional buffer 182 is termed a "volume cell" or voxel 188. Each voxel 188 correlates to an actual location in airspace (space above ground). Based on a well-known relationship between radar reflectivity and attenuation, attenuation values are assigned to each voxel in the three-dimensional buffer 182. The display processor 42 stores attenuation values in the corresponding voxels. If a radar return value indicates maximum attenuation compensation, the display processor 42 executes an algorithm to change/make the value of the corresponding voxel in the three-dimensional buffer 182 to reflect that maximum attenuation compensation has occurred.

The display processor 42 also executes an algorithm to change the value of the other voxels in the three-dimensional buffer 182 to indicate that the reflectivity value of targets located beyond the zone of maximum attenuation compensation relative to the aircraft's present location is unknown due to excessive attenuation. A radial 158 in the three-dimensional buffer 182 corresponding to targets extending away from an airplane 186 contains voxels having a value of "maximum attenuation compensation." The three-dimensional buffer 182 contains voxels having a value of "unknown" 152, 154, 156. The display processor 42 changes the value to "unknown" of voxels because maximum attenuation compensation has occurred prior to the transmitted signal from the antenna 56 reaching any targets corresponding to the voxels 152, 154, 156.

In other embodiments, the volume 182 is a circular buffer. Weather information may also be stored using other suitable models based on artesian coordinates or polar coordinates. Also, models may be based on "absolute" geographic location or by a location relative to the craft.

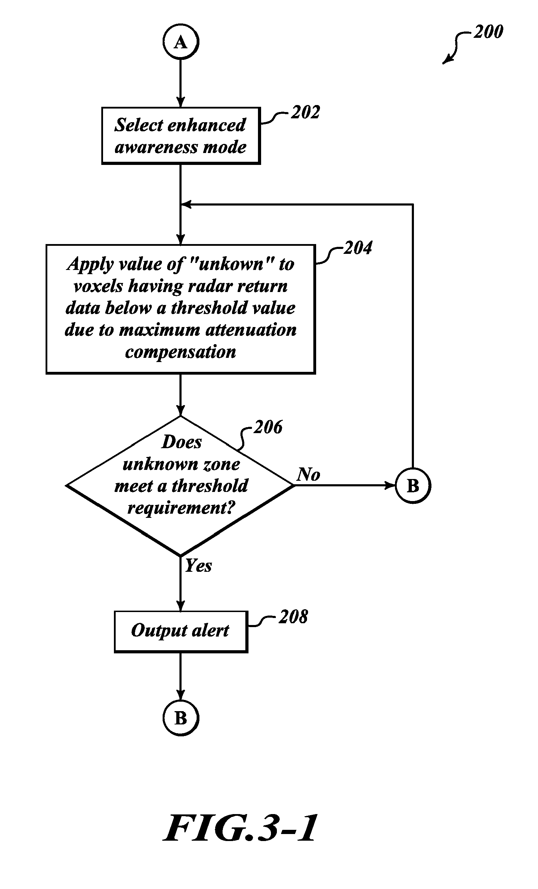

FIGURE 3-1 illustrates a process 200 performed by the display processor 42 shown in FIGURE 1. Received radar signal are continuously being stored in the memory 43. The process 200 is triggered at block 202 when enhanced awareness of unknown weather zones due to maximum attenuation compensation mode is activated. This mode can be activated by the user via the user interface 48 or automatically by a component of the system 30, such as the display processor 42. At block 204 the display processor 42 applies the value of "unknown" to voxels in the 3-D buffer having radar return data below a threshold value due to maximum attenuation compensation being reached and aircraft location. At decision block 206, the display processor 42 determines whether the unknown zone meets a threshold requirement. The threshold requirement is set based on flight parameters, unknown zone location, and aircraft location. The threshold is used to ensure that the unknown zone is relevant to the aircraft. If block 206 returns yes, the process proceeds to block 208, where an alert is outputted and the zone is displayed 208 to the end user. Example alerts are described in subsequent paragraphs. The process 200 then proceeds to an analyze flight plan process 216. If block 206 returns no, the process 200 proceeds to the analyze flight plan process 216.

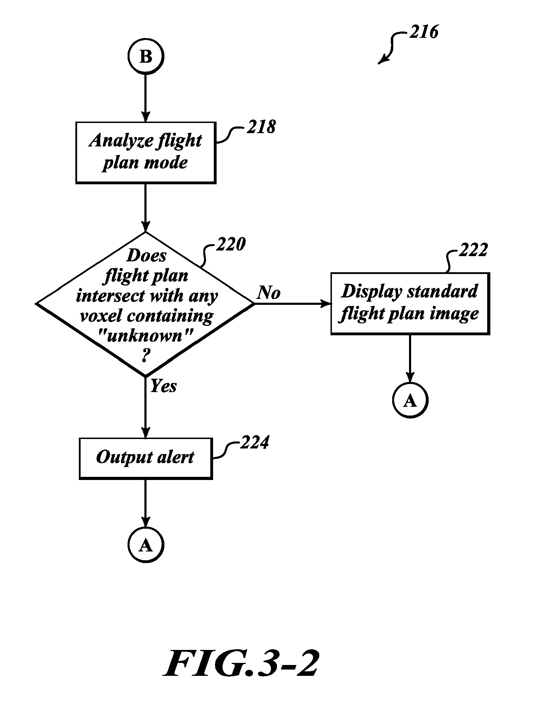

FIGURE 3-2 illustrates the analyze flight plan process 216 where the display processor 42 checks a flight plan for conflicts with any unknown weather zones leading to a possible alert condition. At block 218, an input to the user interface 48 activates the analyze flight plan mode. In other embodiments, the display processor 42 or the system 30 could activate the analyze flight plan mode. At block 220, the display processor 42 compares the flight plan received from the aircraft systems 46 with data in the memory 43. If the flight plan conflicts with any voxel containing the value of unknown or threshold number of voxels containing the unknown value, then an alert is outputted at block 224. Example alerts are described in subsequent paragraphs. The process then returns to the process 200 beginning at block A. If the flight plan does not conflict with a voxel containing unknown, a standard flight plan image is displayed at block 222 and the process transfers to the process 200 at block A. In other embodiments, the alert might be conditioned upon the flight plan conflict residing within a particular threshold determined automatically by the system 30 or manually by the user. The threshold is determined based on flight parameters, the location of the unknown zone, and the location of the aircraft. The threshold represents the relevancy of the unknown zone to the aircraft.

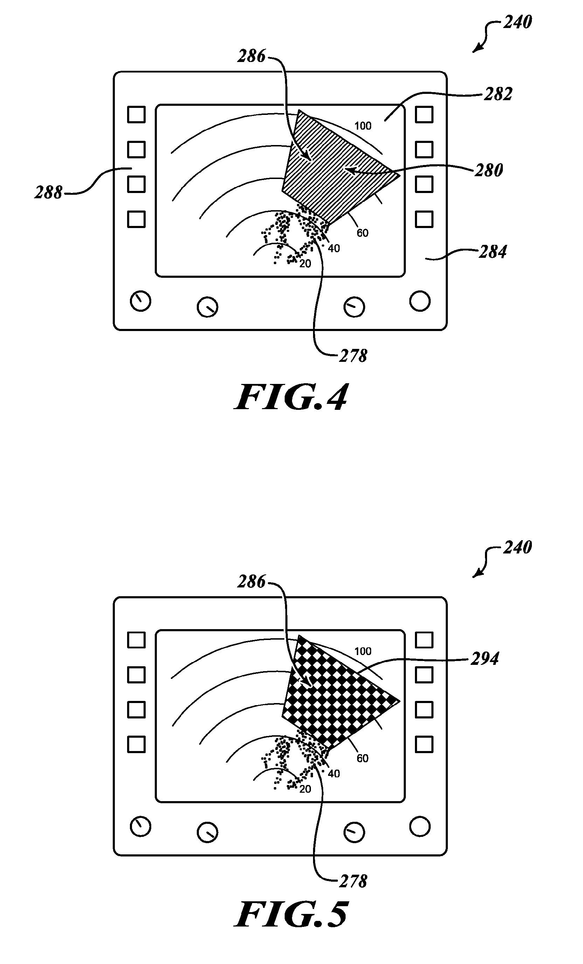

FIGURES 4-10 illustrate some implementations of attenuation-related alerts that are generated. The display processor 42 generates the alerts based on the aircraft location information and the 3-D buffer in the memory 43. The alerts are presented on the display device 44. The displays shown are from a Honeywell display. The display device 44 could include a weather radar display and/or an Electronic Indication and Crew Alerting System (EICAS), Multi-Function Display (MFD), or a three-dimensional display. A three-dimensional view could be included using display technology such as, but not limited to, Integrated Primary Flight Display (iPFD) or Integrated Navigation (iNAV), both by Honeywell International. A combination of plan, vertical and three-dimensional views may be utilized by the display device 44. The views can be aligned along a long track, selected azimuth, flight plan or other point of reference known to those of ordinary skill in the art. The different views may be configured by the user through the user interface 48 or automatically by the system 30.

The characteristics of the alert used in both the enhanced awareness and flight plan modes depend on variables such as the settings of the system 30, any inputs to the user interface 48, and/or the severity of the hazard(s). Visual coding techniques such as generating polygons or shapes in the unknown weather zone may be used alone or in combination to communicate the existence of the unknown weather zone. The use of a color contrasting with the rest of the display to represent an unknown weather zone is another option. Other visual coding techniques such as flashing images, textures, thicknesses of lines, types or density of fill pattern can also be utilized. The different axes in the image(s) can appear in different patterns, thicknesses, flash, and/or change color. Also, icons may be used to indicate the location, type and severity of the hazard. Layers of different shapes may be displayed to show unknown weather zones in three-dimensions. In other embodiments, the alert includes written text. In still other embodiments, the alert may include an auditory alert outputted to one or more speakers.

The severity of the hazard may impact the presentation of the one or more unknown weather zones. The severity of the hazard may be determined by the display processor 42 based on the characteristics of the aircraft such as the distance to the unknown zone as well as the velocity, acceleration, vertical speed, pitch and roll angles, and angular turn rates of the airplane. Additional characteristics such as airplane weight, size, speed, aerodynamic capabilities as well as other flight characteristics known to those of ordinary skill in the art may also be considered when evaluating the severity level of the hazard. Accordingly, the presentation of the alert may change as the threat changes. Also, different coding techniques could be applied to the different types of display devices.

FIGURE 4 is a plan view of a display 240 with reflectivity data presented thereon. The display monitor 240 displays a weather radar image 282 created and sent by the display processor 42. The display monitor 240 has a plurality of inputs 288 and 284 that comprise the user interface 48. The inputs 288 and 284 can be adjusted by the user to activate various modes and views for the display monitor 240. The weather radar image 282 contains plurality of icons indicating weather reflectivity data 278. The weather radar image 282 also contains an unknown weather zone 286. The unknown weather zone 286 is represented by a polygon with a patterned fill 280.

FIGURE 5 is a plan view showing an alternative presentation of an unknown weather zone. In this embodiment, the unknown weather zone 286 is represented by a polygon with a checker pattern fill 294.

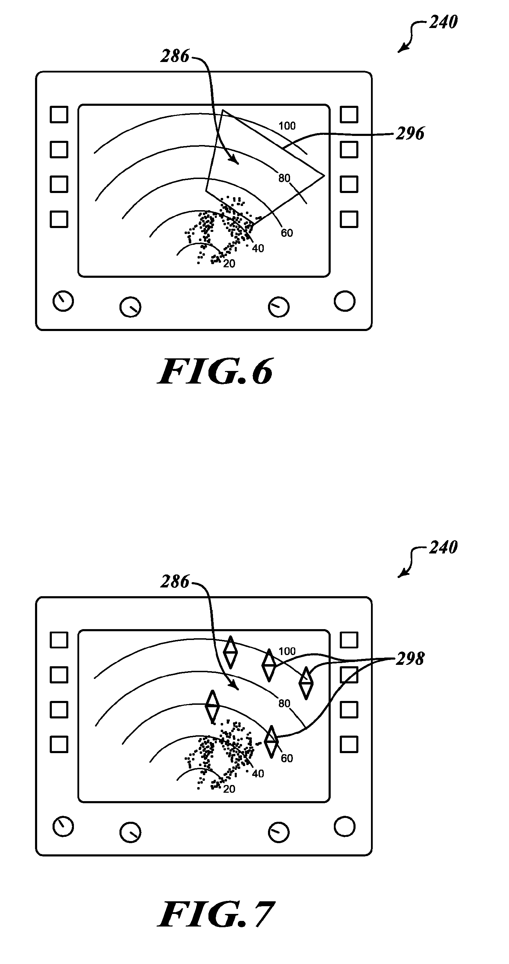

FIGURE 6 is a plan view showing an alternative presentation of the unknown weather zone 286, which is represented by an unfilled polygon 296.

FIGURE 7 is a plan view of an alternative presentation of the maximum attenuation compensation and unknown weather zone 286 represented by a plurality of icons 298. In one embodiment, the icons 298 indicate the level of danger presented by the hazard. For example, the icons could flash, change color, size or shape.

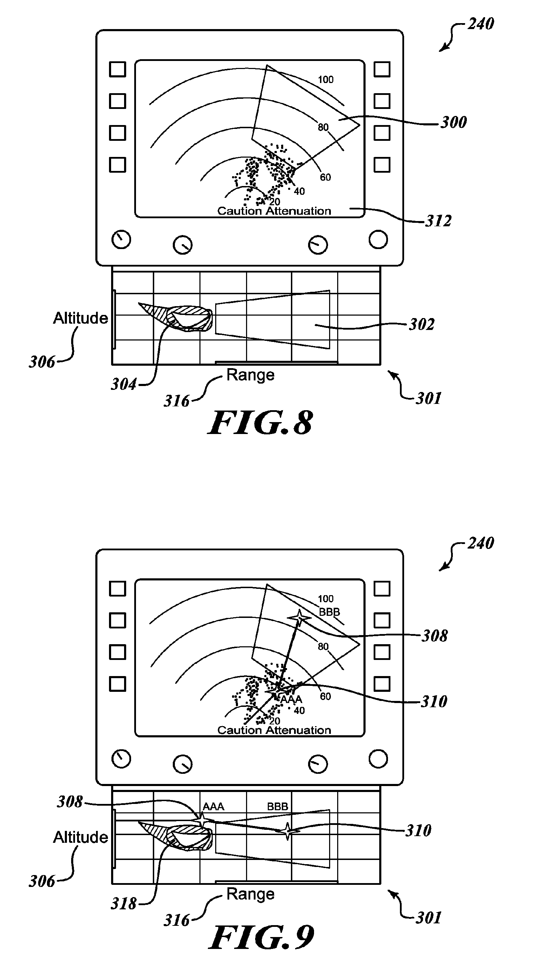

FIGURE 8 is a view showing an example of alert presentation using both a Vertical Situation Display (VSD) 301 and the display monitor 240. An icon 304 representing weather radar data at different elevations is presented on the VSD 301. The VSD 301 has an altitude bar 306 and a range bar 316. The altitude bar 306 and the range bar 316 display an indication of the range in altitudes impacted by the unknown weather zone. The altitude bar 306 or the range bar 316 may be used to facilitate enhanced awareness of an unknown weather zone 302. More specifically, the altitude 306 or the range bar 316 changes size and/or color depending on the level of the hazard. In another embodiment, a visual text alert 312 is also incorporated into the weather radar image 282.

FIGURE 9 shows a presentation incorporating FMS flight components. A first flight plan component 308 and a second flight plan component 310 are incorporated into the display monitor 240 and the VSD 301. Each of the flight plan components 308, 310 may appear differently if it conflicts with an unknown weather zone. Alternatively, the unknown weather zone could appear differently if it conflicts with the flight plan.

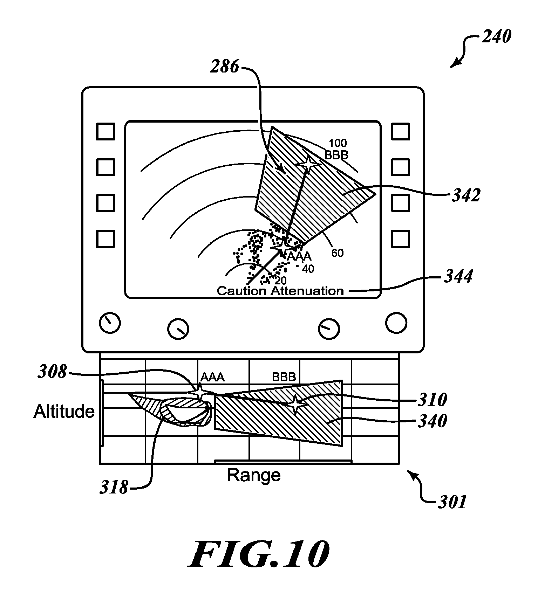

FIGURE 10 shows an alternative presentation configured for situations where the FMS flight plan has been found to conflict with the unknown weather zone 286. In this view, the first flight plan component 308 does not conflict with the unknown weather zone 286. The second flight plan component 310 does conflict with the unknown weather zone 286. In this presentation, the second flight plan component 310 is configured to have a greater thickness than the first flight plan component 308 to facilitate enhanced awareness of the user to the conflict with the unknown weather zone 286.

In addition to the visual coding techniques discussed above, other visual coding such as a color change, flashing type of line (e.g. dotted, dashed) could be used. The presentation could also include terrain information, which could be displayed using the visual coding techniques. Alternatively, the coding techniques discussed herein could be applied to a three-dimensional presentation.

## Claims

1. A method comprising:
receiving one or more parameters;
determining a zone of unknown weather information based on the received parameters and weather radar return information stored in a three-dimensional memory (43, 32); and
outputting an alert based on the determined zone.

2. The method of Claim 1, wherein outputting comprises displaying one or more display features corresponding to the zone of unknown weather information.

3. The method of Claim 2, wherein displaying comprises displaying on at least one of a vertical situation display or a three-dimensional display.

4. The method of Claim 2, further comprising:
determining a hazard level based on one or more parameters; and
determining at least one of color, outline thickness, flashing, fill content, shape, or size of the display features based on hazard level.

5. The method of Claim 1, further comprising:
determining whether a flight plan conflicts with the zone of unknown weather; and
outputting an alert if the flight plan conflicts with the zone of unknown weather.

6. A system comprising:
memory (43, 32) configured to store weather radar return information;
one or more input devices (48) configured to receive one or more parameters;
one or more output devices (44); and
a processor (42) in signal communication with the memory, the one or more input devices, and the one or more output devices, the processor configured to determine one or more unknown weather zones and generate one or more alerts based on the one or more unknown weather zones,
wherein at least one of the output devices is configured to output the generated one or more alerts.

7. The system of Claim 6, wherein the output device is at least one of a two-dimensional display, a three dimensional display, or a speaker.

8. The system of Claim 6, wherein the processor is also configured to determine a hazard level based on at least one of the parameters, and the alert comprises a display feature generated based on at least one of the hazard level and the zone of unknown weather.
